**Europäisches Patentamt**

(19) **European Patent Office**

**Office européen des brevets**

(11) Numéro de publication: **0 055 163**
**B1**

(12) **FASCICULE DE BREVET EUROPEEN**

(45) Date de publication du fascicule du brevet:
16.05.84

(21) Numéro de dépôt: **81401957.6**

(22) Date de dépôt: **09.12.81**

(51) Int. Cl.³: **F 02 K 1/72,** F 02 K 1/09

(54) Dispositif de guidage de carénage mobile d'un système d'inversion de poussée.

(30) Priorité: **23.12.80 FR 8027281**

(43) Date de publication de la demande:
**30.06.82 Bulletin 82/26**

(45) Mention de la délivrance du brevet:
**16.05.84 Bulletin 84/20**

(84) Etats contractants désignés:
**BE DE FR GB IT NL SE**

(56) Documents cités:
**DE - A - 1 946 591**
**FR - A - 2 132 380**
**FR - A - 2 184 021**
**FR - A - 2 354 453**
**US - A - 2 933 890**
**US - A - 3 059 426**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Legrand, Paul Joseph, Résidence du Château Avenue des Frênes, F-77530 Vaux Le Penil (FR)**
Inventeur: **Hersen, René Marie Joseph, 2, rue Flora Tristen, F-77380 Combs La Ville (FR)**

(74) Mandataire: **Moinat, François et al, S.N.E.C.M.A. Service des Brevets Boîte Postale 81, F-91003 Evry Cedex (FR)**

BUNDESDRUCKEREI BERLIN

Dispositif de guidage de carénage mobile d'un système d'inversion de poussée

L'invention concerne un dispositif de guidage du carénage mobile d'un système d'inversion de poussée d'un réacteur monté sur un mât comprenant au moins deux pièces de guidage fixées sur l'ossature supérieure solidaire du mât et des pièces à guider fixées au carénage mobile.

La mise en oeuvre du système d'inversion de poussée de certains turboréacteurs s'effectue par déplacement d'un tronçon situé dans la partie arrière du carénage de nacelle.

La translation vers l'arrière du tronçon a pour effet:

— de faire sortir les grilles d'inversion rétractées dans l'épaisseur de la nacelle;
— d'entraîner des moyens d'obturation qui viennent obturer la veine secondaire en aval des grilles d'inversion;
— de faire refluer vers l'avant, à travers les grilles, tout le débit d'air provenant de la soufflante.

L'invention concerne plus particulièrement le dispositif de guidage monté entre les grilles d'inversion mobiles et une partie fixe, telles que les ossatures supérieure et inférieure de la nacelle solidaires du mât auquel est suspendu le réacteur.

Le brevet français 2 184 021 décrit un dispositif de guidage d'un anneau de capotage susceptible de faire varier la section de passage de la tuyère dans un réacteur comportant une soufflante à pas variable. L'anneau est déplacé de manière à former une entrée d'air lorsque la soufflante fonctionne en inversion de pas. Le dispositif comprend deux pièces de guidage ou rails, parallèles à l'axe de la nacelle, reliés au mât ainsi que l'un à l'autre par des entretoises, dans lesquels coulissent les pièces à guider fixées sur l'anneau. Ces pièces présentent une partie en T qui s'engage dans le rail de guidage. La partie de rail coopérant avec les parties en T est recouverte d'une couche de plastique qui assure l'étanchéité et facilite la translation. L'étanchéité est obtenue par le pivotement de la partie en T sous la charge de l'anneau, les arêtes opposées de la barre transversale formant deux lignes de contact d'étanchéité.

Les fonctions de guidage et d'étanchéité se trouvent convenablement assurées par le dispositif ci-dessus décrit, toutefois la facilité de translation est douteuse, car il faut vaincre les forces de contact qui se développent le long des deux lignes d'étanchéité.

Le brevet français 2 132 380 permet d'éviter cet inconvénient, mais au prix d'une plus grande complexité. Chaque moitié de carénage porte deux aubages d'inversion maintenus entre deux longerons s'étendant axialement. Des organes coulissants, présentant une partie en forme de T, sont fixés au longeron supérieur de l'aubage supérieur et au longeron inférieur de l'aubage inférieur, et coopèrent avec des fentes pratiquées dans les éléments d'ossature supérieur et inférieur. Les longerons portent, en outre, une gouttière qui coopère avec une aile d'un dispositif d'actionnement pour retenir les aubages et permettre leur coulissement. Les ailes des dispositifs d'actionnement ne jouent un rôle important qu'au début de la manoeuvre des aubages. Lorsque les aubages arrivent en position, seuls les organes coulissants dans les fentes prévues dans les éléments d'ossature, assurent le guidage et supportent le poids des aubages et les efforts développés par l'inversion du flux.

On retrouve dans la phase finale de la mise en place des aubages des inconvénients semblables à ceux énoncés vis-à-vis du brevet précédent. En outre, il n'est pas prévu de couche plastique dans les fentes pour faciliter le déplacement.

L'invention vise à fournir un dispositif de guidage dans lequel les frottements sont réduits au minimum lors du coulissement, tout en permettant des mouvements de rotation limités de la pièce guidée dans la pièce de guidage lors du fonctionnement. Selon l'invention, les deux pièces de guidage du dispositif comportent chacune une rainure de section circulaire et les pièces à guider comportent chacune un corps cylindrique présentant selon une génératrice et dans un plan radial, une aile dont l'extrémité porte des moyens de fixation sur une armature du carénage mobile.

Les explications et figures données ci-après à titre d'exemple permettront de comprendre comment l'invention peut être réalisée.

La fig. 1 représente une coupe schématique d'une nacelle de réacteur au niveau de la partie coulissante.

La fig. 2 est une vue en coupe d'un exemple de réalisation du dispositif de guidage selon l'invention.

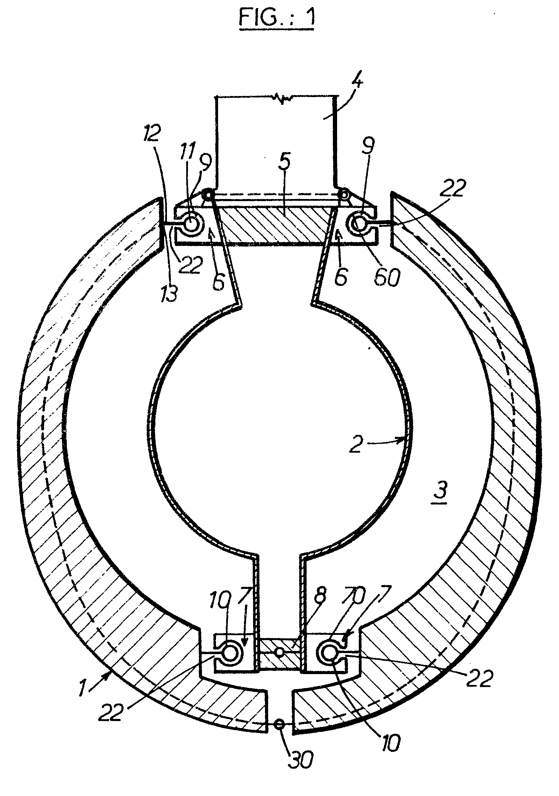

La fig. 1 représente une coupe schématique au niveau du tronçon mobile 1 d'un carénage de nacelle de turboréacteur dont seul le carter 2, fixe, est représenté à la partie centrale de la figure. La paroi intérieure de la nacelle et le carter de réacteur forment un conduit annulaire pour la veine secondaire. Le turboréacteur est fixé au mât 4 par l'intermédiaire d'un élément d'ossature supérieur 5, sur lequel sont fixées ou dans lequel sont prévues des pièces de guidage 6. Des pièces de guidage 7 sont également prévues sur l'élément d'ossature inférieur 8. Ces pièces de guidage 6, 7 reçoivent les pièces à guider 9, 10 fixées sur le tronçon mobile 1. Selon la forme de réalisation de l'invention, les pièces de guidage présentent une rainure de section circulaire (60, 70) d'axe parallèle à celui de la nacelle et du réacteur. Les pièces à guider ont une forme complémentaire de celle de la rainure et se présentent sous l'aspect d'un corps cylindrique 11 portant, selon une génératrice, une aile 12 dont l'ex-

trémité 13 est fixée sur la partie mobile du carénage.

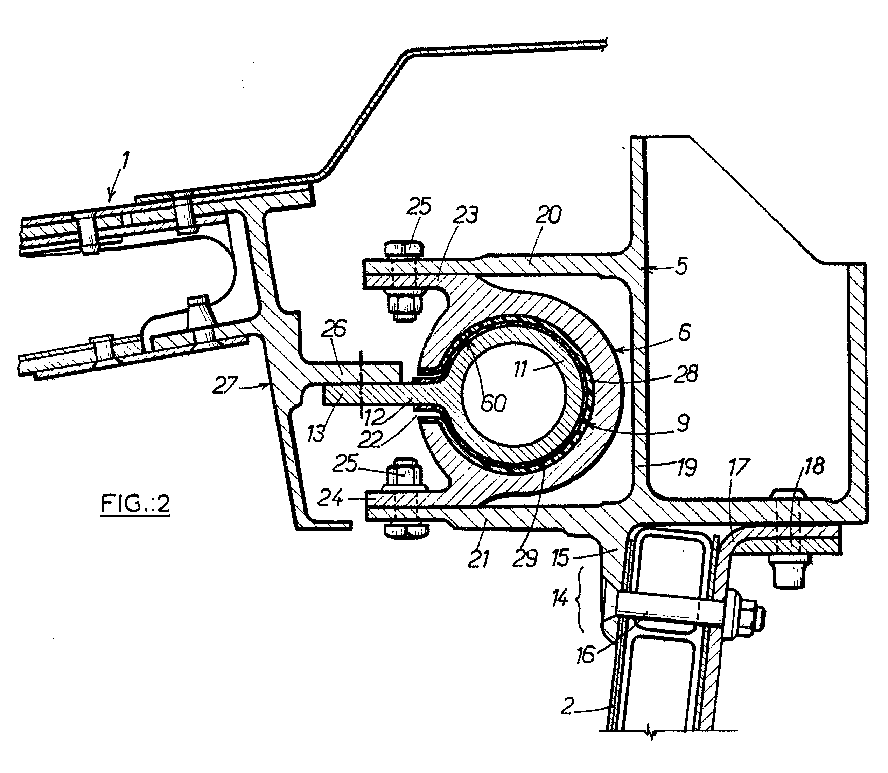

La fig. 2 représente en détail un exemple de réalisation du dispositif de guidage. Les éléments semblables aux éléments de la fig. 1 portent les mêmes références.

L'élément d'ossature supérieur 5 comporte à sa partie inférieure des moyens d'accrochage 14 du carter de réacteur 2.

Ces moyens, en soi classiques, sont constitués d'une aile 15 solidaire de l'ossature et d'un élément en équerre 17, également fixé à l'ossature par boulons et écrous 18, maintenant par des boulons et écrous 16 le carter du réacteur.

L'élément d'ossature présente, sur sa face latérale 19 qui s'étend parallèlement à l'axe du réacteur, des moyens de fixation de la pièce de guidage 6. Ces moyens se composent de deux ailes 20 et 21 solidaires de la face 19 et perpendiculaires à celle-ci.

La pièce de guidage 6 se présente sous forme d'un profilé tubulaire de section approximativement annulaire interrompu selon une génératrice par une fente 22 et comportant selon des plans parallèles au plan de la fente, et tangents audit tube dans l'exemple représenté ou au moins à une distance voisine de celui-ci, deux ailes 23, 24 prévues pour coopérer avec les ailes 20 et 21 de la face 19 de l'ossature 5 et assurer la fixation. Le plan de la fente 22 est approximativement perpendiculaire au plan médian vertical de la nacelle.

La pièce de guidage 6, formant rail, est fixée à l'ossature par tout moyen et selon l'exemple de réalisation par des boulons et écrous 25.

La pièce à guider 9 présente un corps tubulaire cylindrique 11 comportant selon une génératrice et dans un plan radial, une aile 12 dont l'extrémité 13 vient se fixer par des moyens connus sur une aile 26 de l'armature 27 de la partie de carénage 1 mobile.

La fente 22, prévue dans la pièce de guidage 6, a une largeur supérieure à l'épaisseur de l'aile 12 de la pièce à guider.

Selon l'exemple de réalisation représenté, la pièce de guidage et la pièce à guider sont réalisées en un profilé d'alliage d'aluminium. Afin d'améliorer la résistance à l'abrasion et à l'usure et d'obtenir de bonnes caractéristiques de glissement, on a prévu certains aménagements.

La paroi intérieure et les bords de la fente de la pièce de guidage comportent un revêtement 28 en un matériau présentant de bonnes caractéristiques de glissement et résistant à l'usure, par exemple un polyamide chargé de bisulfure de molybdène.

La pièce à guider est revêtue d'un polymère fluoro-carboné 29 présentant de bonnes caractéristiques de glissement, tel par exemple le polytétrafluoroéthylène, chargé de céramique.

Selon différentes formes d'utilisation des matériaux précédemment cités:

— le revêtement 28 de la pièce de guidage se présente sous la forme d'une pièce moulée qui est introduite dans le profilé métallique et y est maintenue, d'une part, par son élasticité radiale et, d'autre part, par des bagues fixées en bout de la pièce de guidage. La pièce moulée se présente sous forme d'un tube cylindrique fendu selon une génératrice, les bords de la fente étant courbés vers l'extérieur selon des plans radiaux;

— le revêtement 29 de la pièce à guider est obtenu soit par projection du matériau plastique sur le corps cylindrique de la pièce et sur une partie de l'aile, soit par collage d'une feuille du matériau.

Le dispositif ci-dessus décrit équipe les faces latérales des ossatures supérieure et inférieure et est disposé de manière que le plan des ailes de la pièce à guider et de la fente de la pièce de guidage soit perpendiculaire au plan de symétrie verticale de la nacelle et, par conséquent, du réacteur.

La partie mobile du carénage se présente sous forme de deux coquilles séparées selon un plan vertical. Ces coquilles sont assemblées à leur partie inférieure par des moyens d'assemblage 30, en soi connu, qui transmettent les efforts sans interruption. Le trait interrompu (fig. 1) doublant intérieurement le profil de la nacelle montre le cheminement des forces de pression dans le carénage et les dispositifs de guidage. Il apparaît nettement que, grâce aux dispositifs de l'invention, la transmission des forces, à leur niveau, se fait avec un minimum de concentration.

En outre, la forme de révolution des pièces coopérantes permet une rotation limitée lors du fonctionnement en inversion de poussée, ne perturbant pas les surfaces de glissement, ni l'étanchéité entre le conduit du flux secondaire 3 et l'extérieur.

Les dispositifs fixés sur l'ossature supérieure prennent la presque totalité de la charge du tronçon mobile 1, ce qui permet un allègement des dispositifs fixés sur l'ossature inférieure qui ne jouent qu'un rôle de guidage.

L'exemple de réalisation ci-dessus décrit peut être modifié tant en ce qui concerne les modes de fixation ou le profil extérieur de la pièce de guidage. Il est possible d'utiliser des matériaux différents pour réaliser les différentes pièces et, en particulier, les revêtements des pièces coopérantes sont matière à option.

Il est également possible d'inverser la position des pièces, la pièce présentant une fente étant alors portée par le carénage mobile et la pièce présentant un corps cylindrique et une aile par l'ossature, sans pour cela sortir du cadre de l'invention.

## Revendications

1. Dispositif de guidage du carénage mobile d'un système d'inversion de poussée d'un réacteur monté sur un mât comprenant deux pièces de guidage fixées sur l'ossature supérieure solidaire du mât et des pièces à guider fixées au carénage mobile, caractérisé en ce que la pièce de guidage (6, 7) comporte une rainure (60, 70) de section circulaire, et en ce que la pièce à guider (9, 10) comporte un corps cylindrique (11) présentant selon une génératrice et dans un plan radial, une aile (12) dont l'extrémité (13) porte des moyens de fixation sur une armature (27) du carénage mobile (1).

2. Dispositif de guidage selon la revendication 1, caractérisé en ce que la pièce de guidage (6, 7) est formée d'un profilé tubulaire de section approximativement annulaire interrompu selon une génératrice par une fente (22) et comportant selon des plans parallèles au plan de la fente et à une distance voisine dudit tube, deux ailes (23, 24) prévues pour la fixation sur l'ossature.

3. Dispositif de guidage selon la revendication 1 ou 2, caractérisé en ce que le plan de la fente (22) est approximativement perpendiculaire au plan médian vertical de la nacelle.

4. Dispositif de guidage selon l'une des revendications 1 à 3, caractérisé en ce que le corps cylindrique (11) de la pièce à guider (9, 10) est tubulaire.

5. Dispositif de guidage selon l'une des revendications précédentes, caractérisé en ce qu'au moins une des pièces du dispositif est faite un alliage de métaux légers recouvert d'un revêtement (28) en un matériau présentant de bonnes caractéristiques de glissement et résistant à l'usure.

6. Dispositif de guidage selon la revendication 5, caractérisé en ce que le revêtement (28) de la pièce de guidage (6, 7) est formé d'une pièce moulée de forme cylindrique tubulaire fendue selon une génératrice, les bords de la fente étant courbés vers l'extérieur selon des plans radiaux.

7. Dispositif de guidage selon la revendication 5, caractérisé en ce que le revêtement de la pièce de guidage (6, 7) est formé d'une feuille de matériau collée.

8. Dispositif de guidage selon la revendication 6 ou 7, caractérisé en ce que le revêtement de la pièce à guider (9, 10) est formé d'une feuille de matériau collée.

9. Dispositif de guidage selon l'une des revendications 5 à 7, caractérisé en ce que l'une des pièces de guidage (6, 7) ou à guider (9, 10) comporte un revêtement par projection de matériau.

## Patentansprüche

1. Gleitführung für die verschiebbare Verkleidung eines Schubumkehrsystems eines Turbotriebwerks, das an einem Stiel angebracht ist, der zwei Führungsteile aufweist, die an der oberen, mit dem Stiel starr verbundenen Tragkonstruktion befestigt sind, sowie zu führende Teile, die an der verschiebbaren Verkleidung befestigt sind, dadurch gekennzeichnet, daß das Führungsteil (6, 7) eine Rinne (60, 70) mit Kreisquerschnitt aufweist, und daß das zu führende Teil (9, 10) ein zylindrisches Bauteil (11) aufweist, das längs einer Mantellinie mit einem in einer Radialebene liegenden Flügel (12) versehen ist, dessen Ende (13) Mittel zur Befestigung an einem Beschlag (27) der verschiebbaren Verkleidung (1) besitzt.

2. Gleitführung nach Anspruch 1, dadurch gekennzeichnet, daß das Führungsteil (6, 7) aus einem rohrförmigen Profilstahl von ungefährer Kreisform besteht, unterbrochen längs einer Mantellinie durch einen Schlitz (22) und mit zwei parallel zu der Ebene des Schlitzes und in einem gewissen Abstand neben dem Rohr verlaufenden Flügeln (23, 24) versehen, die zur Befestigung an der Tragkonstruktion dienen.

3. Gleitführung nach Anspruch 1 oder 2, dadurch gekennzeichnet, daß die Ebene des Schlitzes (22) ungefähr senkrecht auf der Vertikalmittelebene des Triebwerkrumpfes steht.

4. Gleitführung nach einem der Ansprüche 1 bis 3, dadurch gekennzeichnet, daß das zylindrische Bauteil (11) des zu führenden Teils (9, 10) rohrförmig ausgebildet ist.

5. Gleitführung nach einem der vorhergehenden Ansprüche, dadurch gekennzeichnet, daß mindestens eines der Teile der Vorrichtung aus einer Leichtmetall-Legierung besteht, bedeckt mit einem Überzug (28) aus einem Werkstoff mit guten Gleiteigenschaften und hoher Verschleißfestigkeit.

6. Gleitführung nach Anspruch 5, dadurch gekennzeichnet, daß der Überzug (28) des Führungsteils (6, 7) aus einem Formteil von Zylinderrohrform besteht, das längs einer Mantellinie aufgeschlitzt ist und bei dem die Ränder des Schlitzes in Radialebenen nach außen abgebogen sind.

7. Gleitführung nach Anspruch 5, dadurch gekennzeichnet, daß der Überzug des Führungsteils (6, 7) aus geklebtem Folienmaterial besteht.

8. Gleitführung nach Anspruch 6 oder 7, dadurch gekennzeichnet, daß der Überzug des zu führenden Teils (9, 10) aus geklebtem Folienmaterial besteht.

9. Gleitführung nach einem der Ansprüche 5 bis 7, dadurch gekennzeichnet, daß eines der Führungsteile (6, 7) oder der zu führenden Teile (9, 10) einen durch Materialaufspritzen entstandenen Überzug besitzt.

## Claims

1. Guide device for the sliding cover of a thrustreverser system for a jet engine mounted on a rail comprising two guide members fixed on the upper framework rigid with the rail and parts to be guided secured to the movable cover, characterized in this that the guide member (6, 7) comprises a groove (60, 70) of circular section, and in this that the part to be guided (9, 10) comprises a cylindrical body (11) having, along a generating line, and in a radial plane, a flange (12) of which the end (13) carries securing means on a framework (27) of the movable cover (1).

2. Guide device according to claim 1, characterized in this that the guid part (6, 7) is formed by a tubular profile of approximately annular section interrupted on a generating line by a slot (22) and comprising on planes parallel to the plane of the slot and at a spacing adjacent to the aid tube, two flanges (23, 24) provided for securing on the framework.

3. Guide device according to claim 1 or 2, characterized in this that the plane of the slot (22) is approximately perpendicular to the vertical median plane of the casing.

4. Guide device according to one of claims 1 to 3, characterized in this that the cylindrical body (11) of the part to be guided (9, 10) is tubular.

5. Guide device according to any one of preceding claims, characterized in this at least one of the parts of the device is made of an alloy of two light metals covered with a coating (28) of a material having good sliding characteristics and resistant to wear.

6. Guiding device according to claim 5, characterized in this that the covering (28) of the guide part (6, 7) is formed by a moulded part of cylindrical tubular form generated by generating line, the edges of the slot being curved outwardly in radial planes.

7. Guide device according to claim 5, characterized in this that the covering of the guide part (6, 7) is formed by sheet of adhesive material.

8. Guide device according to claim 6 or 7, characterized in this that the covering of the part to be guided (9, 10) ist formed by a sheet of adhesive material.

9. Guide device according to one of claims 5 to 7, characterized in this that one of the guide parts (6, 7) or to be guided (9, 10) comprises a projected coating of material.

FIG. : 1

FIG.:2